Europäisches Patentamt

(19) European Patent Office

Office européen des brevets

(11) **EP 0 488 251 B1**

(12) **EUROPEAN PATENT SPECIFICATION**

(45) Date of publication and mention
of the grant of the patent:
**20.03.1996 Bulletin 1996/12**

(51) Int. Cl.$^6$: **C01D 3/14**, C25B 15/08

(21) Application number: **91120323.0**

(22) Date of filing: **27.11.1991**

(54) **Process for removing chlorate salt from aqueous alkali chloride solution**

Verfahren zur Entfernung von Chlorat aus einer wässrigen Natriumchloridlösung

Procédé d'élimination de chlorate d'une solution aqueuse de chlorure de sodium

(84) Designated Contracting States:
**DE FR GB IT NL**

(30) Priority: **28.11.1990 JP 322353/90**
**12.11.1991 JP 322413/91**

(43) Date of publication of application:
**03.06.1992 Bulletin 1992/23**

(73) Proprietor: **Tosoh Corporation**
**Shinnanyo-shi, Yamaguchi-ken, 746 (JP)**

(72) Inventors:
• **Okajima, Kengo**
**Shinnanyo-shi, Yamaguchi-ken (JP)**
• **Wakamatsu, Hiroyuki**
**Tokuyama-shi, Yamaguchi-ken (JP)**
• **Kumoi, Sadakatsu**
**Hikari-shi, Yamaguchi-ken (JP)**
• **Murakami, Tsugio**
**Shinnanyo-shi, Yamaguchi-ken (JP)**

(74) Representative: **Bühling, Gerhard, Dipl.-Chem. et**
**al**
**Patentanwaltsbüro**
**Tiedtke-Bühling-Kinne & Partner**
**Bavariaring 4**
**D-80336 München (DE)**

(56) References cited:
**EP-A- 0 098 500**

• **PATENT ABSTRACTS OF JAPAN vol. 13, no. 208**
**(C-596)16 May 1989 & JP-A-01 025992**
• **WORLD PATENTS INDEX DERWENT**
**PUBLICATIONS LTD, LONDON GB ACCESSION**
**NO. 78- 26000A, WEEK 14 & JP-A-53018498**
• **WORLD PATENTS INDEX DERWENT**
**PUBLICATIONS LTD, LONDON GB ACCESSION**
**NO. 78-79127A, week 44 & JP-A-53110998**
• **WORLD PATENTS INDEX LATEST DERWENT**
**PUBLICATIONS LTD, LONDON GB ACCESSION**
**NO. 83-02817K, WEEK 02 & JP-A-57 191225**
• **PATENT ABSTRACTS OF JAPAN vol. 10, no. 280**
**(C-374)24 September 1986 & JP-A-51 101 402**

Note: Within nine months from the publication of the mention of the grant of the European patent, any person may give notice to the European Patent Office of opposition to the European patent granted. Notice of opposition shall be filed in a written reasoned statement. It shall not be deemed to have been filed until the opposition fee has been paid. (Art. 99(1) European Patent Convention).

Printed by Rank Xerox (UK) Business Services
2.9.13/3.4

## Description

Background of the Invention:

Field of the Invention:

The present invention relates to a process for purifying an aqueous alkali chloride solution (hereinafter referred to as a "salt solution") for cation-exchange membrane electrolysis of alkali chloride, more specifically to a process for removing an accumulated chlorate salt in a salt solution circulating in an electrolysis system.

Description of the Related Art:

Several processes have been disclosed regarding the removal of a chlorate salt from a salt solution. In a typical process, a chlorate salt in a salt solution is decomposed by addition of hydrochloric acid through the reactions shown below and removed therefrom.

$$ClO_3{}^- + 2\ HCl \rightarrow ClO_2 + 1/2\ Cl_2 + Cl^- + H_2O \quad (1)$$

or

$$ClO_3{}^- + 6\ HCl \rightarrow 3\ Cl_2 + Cl^- + 3\ H_2O \quad (2)$$

This process is disadvantageous in that a long time is required for removing the chlorate salt because the reaction of hydrochloric acid with the chlorate salt is slow.

Accordingly, further improvements have been disclosed to remove quickly a chlorate salt from a salt solution: for example, a method of saturating the salt solution with alkali chloride and subsequently adding hydrochloric acid (Japanese Patent Application Laid-Open No. Sho 59-20483); and a method of maintaining the concentration of hydrochloric acid in the salt solution at a level of higher than 150 g/l (Japanese Patent Application Laid-Open No. Sho 57-191225). However, in the former method comprising saturating a salt solution with an alkali chloride and subsequently adding hydrochloric acid, troubles are liable to be caused owing to deposition of salts on addition of hydrochloric acid, while in the latter method comprising maintaining the hydrochloric acid concentration at a level higher than 150 g/l, the hydrochloric acid concentration is superfluously high after the decomposition of the chlorate salt. Thus these methods disadvantageously require complicated additional after-treatment and treating chemicals such as treatment of the deposited salt, and addition of neutralizing alkali to lower the hydrochloric acid concentration.

In the process of decomposing a chlorate salt in salt solution by addition of a relatively small amount of hydrochloric acid, chlorine dioxide is formed as shown in the above formula (1). For recovering useful chlorine from the chlorine dioxide formed in decomposition and removal of a chlorate salt in the salt solution, a method is disclosed in which the formed chlorine dioxide is decomposed by heating into chlorine and oxygen (Japanese Patent Application Laid-Open No. Sho 61-101402). This method, however, disadvantageously requires steps of decomposition of chlorine dioxide, and separation of chlorine and oxygen formed, thus the process being made complicated.

Another method for removing a chlorate salt from a salt solution is disclosed in which a catalyst layer is provided in a salt solution circulating pipeline feeding the salt solution to an alkali chloride electrolysis cell of an ion-exchange membrane process and the chlorate salt is decomposed and removed by introducing hydrogen or a hydrogen-containing gas (Japanese Patent Application Laid-Open No. Sho 56-163286). This method involves the problems of increase of impurity caused by elution of the catalyst and increase of the cost owing to the complexity of the process. Still another method for removing a chlorate salt is known in which the circulating salt solution is partly taken out and cooled to crystallize out and separate the chlorate salt (Japanese Patent Application Laid-Open No. Sho 51-144399). This method involves the problems of incompleteness of removal of the chlorate salt, complexity of the process, and high cost of cooling. In still other methods, a chlorate salt is removed by adding a reducing agent such as sodium sulfite and hydrogen sulfide into a salt solution (Japanese Patent Application Laid-Open Nos. Sho 53-123396 and Sho 60-77982), or by decomposing a chlorate salt in an acidic condition in the presence of an ion-exchange membrane (Japanese Patent Application Laid-Open No. Sho 63-129015). Such methods respectively involve the problems of accumulation of a sulfate salt and a high cost of the treating chemicals, and the problems of low decomposition degree of the chlorate salt and difficulty in industrialization.

The inventors of the present invention, after extensive investigation regarding the methods of decomposition of a chlorate salt in a salt solution, found that the chlorate salt is removed effectively and efficiently by adding hydrochloric acid into the salt solution and then keeping the salt solution at a reduced pressure within a specified range, in a decomposition vessel.

Summary of the Invention:

The present invention intends to provide a process for removing a chlorate salt from a salt solution by use of hydrochloric acid, wherein the chlorate salt is decomposed quickly with a small amount of hydrochloric acid, the salt solution is purified effectively and efficiently, and useful chlorine is recovered in high purity.

The present invention provides a process for removing a chlorate salt from an aqueous alkali chloride solution to be subjected to a cation-exchange membrane electrolysis, comprising preparing a reaction solution by adding hydrochloric acid to the aqueous alkali chloride solution; and keeping the reaction solution at an absolute pressure of not higher than 80.0 kPa (600 mmHg) and not lower than the saturated vapor pressure of the solution in a decomposition vessel. Preferably, the reaction solution is feeded to the bottom portion of a decomposition vessel and is flown the reaction solution upward therefrom.

## Detailed Description of the Preferred Embodiment:

According to the process of the present invention, a chlorate salt in a salt solution is decomposed and removed effectively and efficiently with a less amount of hydrochloric acid. In particular, a chlorate salt in a salt solution is decomposed and removed effectively and efficiently when the reaction solution prepared by adding hydrochloric acid to the salt solution is kept at an absolute pressure of not higher than 80.0 kPa (600 mmHg) and not lower than the saturated vapor pressure of the solution in a decomposition vessel, and additionally the reaction solution is fed to a bottom portion of a decomposition vessel and made to flow upward in the decomposition vessel. The decomposition product formed from the chlorate salt includes an alkali chloride and useful chlorine, which are utilized effectively.

The present invention is described below in detail.

Firstly the invention is explained regarding the process in which the absolute pressure in the decomposition vessel is kept at a pressure of not higher than 80.0 kPa (600 mmHg) and not lower than the saturated vapor pressure of the reaction solution. In the present invention the term "salt solution" means an aqueous solution of sodium chloride, potassium chloride, or the like. This process is applicable effectively to the salt solution having a salt concentration of usual electrolysis salt solution, namely from about 150 g/l to about 300 g/l.

In this process, hydrochloric acid to be added to the salt solution may be added either into a pipeline for feeding the salt solution to a decomposition vessel or into the decomposition vessel itself. The addition into the pipeline is preferable in view of the uniformity of the reaction and the ease of the operation. The larger the amount of the added hydrochloric acid, the more efficiently is the chlorate salt decomposed in the salt solution. However, if hydrochloric is added in an excessively large amount, the excess of hydrochloric acid have to be neutralized. In this process, since the chlorate salt will be decomposed effectively and efficiently, the hydrochloric acid is to be added preferably in a less amount. The amount of the hydrochloric acid is within the range of from 10 to 50 moles, preferably from 15 to 30 moles, per mole of the chlorate salt in the salt solution. The hydrochloric acid may be added as gaseous hydrogen chloride to the salt solution.

Subsequently the above-mentioned reaction solution which is a mixture of the salt solution and the hydrochloric acid is kept in a decomposition vessel, in which the pressure (absolute) is essentially kept to be not higher than 80.0 kPa (600 mmHg) and not lower than the saturated vapor pressure of the reaction solution. Thereby, the decomposition of the chlorate salt in the salt solution is accelerated effectively. At an absolute pressure in the decomposition vessel of higher than 80.0 kPa (600 mmHg), the decomposition of the chlorate by hydrochloric acid proceeds less effectively, and the removal of chlorine gas becomes insufficient, while, at the pressure of 80.0 kPa (600 mmHg) or lower, the effect is actually remarkable. On the contrary, at an absolute pressure in the decomposition vessel of lower than the saturated vapor pressure of the reaction solution, water vapor is emitted in a large amount, which consumes a great amount of heat energy, and furthermore, increases the water content in the produced chlorine, necessitating separation of the chlorine from the water vapor without giving significant effect on decomposition of the chlorate salt. Further, the generation of water vapor consumes the evaporation heat, which lowers the reaction temperature to decrease the reaction velocity. Accordingly, sufficient effect is achieved only by keeping the pressure in the decomposition vessel within the range of the present invention. More preferably the pressure is not higher than 66.7 kPa (500 mmHg), and not lower than 1.33 kPa (10 mmHg) above the saturated vapor pressure of the reaction solution. The saturated vapor pressure depends on the kind of the salt solution, the chlorate salt concentration, and the kinds and the concentration of impurity species, and is suitably measured. For example, an aqueous sodium chloride solution at 90 °C has saturated vapor pressures of about 62.7 kPa (470 mmHg) at a concentration of NaCl of 150 g/l; about 60.0 kPa (450 mmHg) at 200 g/l; and about 56.0 kPa (420 mmHg) at 250 g/l. The reduction of the pressure in the decomposition vessel may be carried out by means of a vacuum pump, a water ejector, a steam ejector, or the like. The use of a warm-water ejector is particularly preferred since it enables obtaining high-purity chlorine gas or liquefied chlorine as a byproduct in such a manner that the ejected liquid-gas mixture from the ejector is introduced into a tank to be kept standing therein, and the liquid phase is recycled to the ejector and he gas phase is separated and dehydrated.

The type of the decomposition vessel used in this process is not particularly limited, and may, for example, be of a tank type or of a column type. For decomposing effectively a chlorate salt in a salt solution, the tank type vessel is preferably stirred, and the column type vessel is preferably not stirred and not filled with packings. The height of the liquid layer in the decomposition vessel is preferably not less than 1 m, more preferably not less than 2 m, thereby the amount of byproduct chlorine dioxide being reduced. The decomposition of a chlorate salt may be conducted either by a continuous process or by a batch process: continuous processes being preferable in view of productivity and operability.

Secondly, the preferred embodiment of the present invention is described regarding the process in which the reaction solution is fed to the bottom portion of a decomposition vessel and made to flow upward in the vessel. The applicable salt solution is an aqueous solution of sodium chloride, potassium chloride, or the like. This preferred embodiment is effectively applied to the salt solution having a concentration of usual electrolysis salt solution, namely from about 150 g/l to about 300 g/l.

In this preferred embodiment of the present invention, the hydrochloric acid to be added to the salt solution may be added either into a pipeline feeding the liquid to the decomposition vessel or into the bottom portion of the decomposition vessel. Preferably the hydrochloric acid is added into a pipeline feeding the salt solution to the decomposition vessel, and more preferably the salt solution and the hydrochloric acid is mechanically mixed therein from the standpoint of the uniform reaction and the simplicity of the operation. A larger amount of the added hydrochloric acid decomposes the chlorate salt in the salt solution more efficiently. However, if hydrochloric acid is added in an excessively large amount, the excess of hydrochloric acid have to be neutralized. In this preferred embodiment, since the chlorate salt will be decomposed effectively and efficiently, the hydrochloric acid is to be added preferably in a less amount. The amount of the hydrochloric acid is within the range of from 10 to 50 moles, preferably from 15 to 30 moles, per mole of the chlorate salt in the salt solution. The hydrochloric acid may be added as gaseous hydrogen chloride to the salt solution.

Subsequently, the aforementioned reaction solution prepared by adding hydrochloric acid to the salt solution is fed to a bottom portion of a decomposition vessel and is made to flow upward in the decomposition vessel, thereby decomposition of the chlorate salt in the salt solution being accelerated effectively.

The shape and the size of the decomposition vessel are not limited. However, a long column type of vessel is preferable, which allows the reaction solution to flow roughly in a piston flow. The term, piston flow, means an ideal flow in which no mixing nor diffusion of the flowing liquid occurs in the direction of the liquid flow and the liquid flow velocity is uniform in the plane perpendicular to the flow direction. In the case where the reaction solution flows downward, the decomposition efficiency is extremely low, even if the reaction solution flows in a piston flow. Presumably, the reason is that the actual residence time of the reaction solution is decreased owing to insufficient degassing of formed chlorine, and the reverse reaction mentioned later occurs. Further, in the downward flow, the ratio of chlorine dioxide in the formed chlorine gas becomes higher. Although the decomposition vessel may be equipped with a stirrer, the stirrer requires equipment cost and the energy for stirring, and yet does not improve the chlorate decomposition efficiency. Therefore a stirrer is preferably not installed in view of the cost of the equipment, the simplicity of the operation, and the decomposition efficiency.

The decomposition vessel is preferably of a long column type, specifically having an inside diameter of the column of from 0.03 to 3 m, and a liquid height of 0.5 to 20 m, more preferably having an inside diameter of 0.04 to 2 m and a liquid height of 2 to 15 m.

An excessively smaller inside diameter causes larger loss of pressure and complexity of apparatuses and operations, and increases mixing in vertical direction caused by chlorine gas bubbles to lower the decomposition efficiency. An excessively larger inside diameter causes increased mixing in the vertical direction, lowering the decomposition efficiency.

An excessively smaller liquid height in the decomposition vessel increases mixing of the liquid in the vertical direction, lowering the decomposition efficiency, while an excessively large liquid height increases equipment cost and complicates the operation.

If a larger liquid height is required, a plurality of the decomposition vessel may be employed and connected in series, where the formed chlorine gas is preferably separated and recovered in each of the decomposition vessels.

An ordinary tank type of decomposition vessel may be employed in the case where column type of decomposition vessel cannot be employed. Naturally in this case also, the solution is made to flow upward. In the tank type of decomposition vessel, the decomposition degree is somewhat lower because of the increase of mixing of the solution in vertical direction. For the purpose of raising the decomposition degree in the tank type of decomposition vessel, the vessel preferably is partitioned along the liquid flow direction, namely in vertical direction, for example, by inserting the pipes having the aforementioned inside diameter of column type of decomposition vessel, or by providing a grid type of partition plates. Each of the partitioned sections has preferably a sectional area equivalent to that of the aforementioned column type of decomposition vessel, namely in the range of from 7 $cm^2$ to 7$m^2$, more preferably from 12 $cm^2$ to 3 $m^2$, still more preferably from 12 $cm^2$ to 0.5 $m^2$. In this case, the height of the liquid layer in the decomposition vessel is preferably equivalent to that of the aforementioned column type of decomposition vessel. The upward flow velocity of the reaction solution is preferably in the range of from 0.3 to 40 m/hr, more preferably from 0.5 to 25 m/hr in the tank type as well as in the column type. This value is calculated from the volume of the reaction solution in the decomposition vessel and the flow rate of the reaction solution. An excessively large upward flow velocity increases pressure loss, and requires length of the apparatus, increasing the apparatus cost and complicating the operation, while excessively smaller upward flow velocity increases mixing in vertical direction, lowering the decomposition efficiency.

In this preferred embodiment of the present invention, the decomposition is conducted continuously, which improves the productivity and operability.

The chlorate salt is decomposed at a satisfactorily high efficiency in the aforementioned case where a reaction solution composed of the salt solution and hydrochloric acid is kept at an absolute pressure of not higher than 80.0 kPa (600 mmHg) and not lower than the saturated vapor pressure of the solution in a decomposition vessel, and additionally the reaction solution is fed to a bottom portion of a decomposition vessel and made to flow upward in the decomposition vessel. The salt solution employed is as mentioned already.

In the tank type of decomposition vessel, the hydrochloric acid is added to the salt solution in the same site, by the same method, and in the same amount as those described regarding the upward-flow in the column type of decomposition vessel. The internal pressure of the decomposition vessel is kept at an absolute pressure of not higher than 80.0 kPa (600 mmHg) and not lower than the saturated vapor. The reduced pressure combined with the upward flow in the decomposition vessel remarkably improves the efficiency of the decomposition of the chlorate salt by hydrochloric acid. At an absolute pressure in the decomposition vessel of higher than 80.0 kPa (600 mmHg) the decomposition of the chlorate by hydrochloric acid proceeds less effectively, and the removal of chlorine gas becomes insufficient, while, at the pressure of 80.0 kPa (600 mmHg) or lower, the effect is actually remarkable. On the contrary, at an absolute pressure in the decomposition vessel of lower than saturated vapor pressure of the reaction solution, water vapor is emitted in a large amount, which consumes an excessively great amount of heat energy, and furthermore increases the water content in the produced chlorine, necessitating separation of formed chlorine from the water vapor, and giving no significant effect on decomposition of the chlorate salt. Further, the generation of water vapor consumes the evaporation heat, which lowers the reaction temperature to decrease the reaction velocity. Accordingly, sufficient effect is attained only by keeping the pressure in the decomposition vessel within the range of the present invention. More preferably the pressure is not higher than 66.7 kPa (500 mmHg) and not lower than 1.33 kPa (10 mmHg) above the saturated vapor pressure of the reaction solution. The saturated vapor pressure depends on the kind of the salt solution, the chlorate salt concentration, and the kinds and the concentration of impurity species, and is suitably determined. For example, an aqueous sodium chloride solution at 90 °C has a saturated vapor pressures of about 62.7 kPa (470 mmHg) at a concentration of NaCl of 150 g/l; about 60.0 kPa (450 mmHg) at 200 g/l; and about 56.0 kPa (420 mmHg) at 250 g/l. The reduction of the pressure in the decomposition vessel may be carried out by means of a vacuum pump, a water ejector, a steam ejector, or the like. In particular, use of a warm-water ejector is preferred since it enables obtaining high-purity chlorine gas or liquefied chlorine as a byproduct in such a manner that the ejected liquid-gas mixture from the ejector is introduced into a tank to be kept standing therein, and the liquid phase is recycled to the ejector and the gas phase is separated and dehydrated.

The flow of the liquid in the decomposition vessel is the same as that described regarding the aforementioned upward flow.

In this process, the chlorate salt is decomposed in a continuous process, so that the productivity and operability are improved.

In the present invention, the conditions of keeping the reaction solution in the decomposition vessel is not particularly limited. The higher the temperature, the shorter is the time required for decomposition of a chlorate salt in the salt solution. The longer the holding time, the higher is the decomposition ratio of the chlorate salt. Usually, the chlorate salt in the salt solution is sufficiently decomposed and removed at a temperature in the range of from about 70 to about 100 °C and the holding time in the range of from about 0.1 to about 3 hours.

According to the process described above, the chlorate salt in salt solution can be decomposed and removed effectively and efficiently. According to the process of the present invention, a chlorate salt accumulated in salt solution during electrolysis thereof usually in an amount of from 2 to 50 g/l can be readily lowered to the concentration level of from 1 to 30 g/l as required for normal electrolysis operation. Therefore the process is effectively employed as a means for removing a chlorates salt from the salt solution in electrolysis.

The removal of the chlorate salt from the salt solution according to the present invention may be conducted at any site of the pipelines which transport the return salt solution from the electric cell to a raw-salt dissolving tank, and transport the salt solution, after re-saturation of the salt solution with the raw salt, to the electrolytic cell. The removal operation is particularly preferably conducted in the pipeline transporting the salt solution, which has been re-saturated with the alkali chloride, to the electrolytic cell because, at this site of the pipeline, the salt solution concentration is high so that the decomposition of the chlorate proceeds more readily. Otherwise the removal operation is preferably conducted at the position of introducing hydrochloric acid in the system in which hydrochloric acid is added to return salt solution and a part of the salt solution is recycled to the electrolytic cell. The former case is advantageous in that the amount of the hydrochloric acid to be added can be decreased, thus deposition of salt being avoided nearly completely. The latter case is advantageous in that the amount of the hydrochloric acid to be added can further be decreased and the temperature of the salt solution is still maintained high. Furthermore, in these cases, the entire salt solution may be treated, or a part of the salt solution may be branched and treated.

The chlorate salt is removed effectively and efficiently, and chlorine dioxide as a byproduct is decreased by keeping the reaction solution composed of a chlorate-containing salt solution and hydrochloric acid at a pressure within the specified range. Although the reason therefor is not clearly known, it is assumed as below. A hypochlorite salt is estimated to be formed as an intermediate in the decomposition reaction of a chlorate salt by hydrochloric acid to form chlorine and chlorine dioxide, and simultaneous reverse reaction of forming a chlorate from the hypochlorite salt is estimated to proceed. The reduction of the pressure is considered to accelerates the change of hypochlorite salt to chlorine and suppress the formation of chlorine dioxide as the byproduct.

Further, the chlorate salt is removed effectively and efficiently, and the ratio of formation of chlorine dioxide is decreased by flowing the reaction solution, which has been prepared by adding hydrochloric acid to chlorate-containing salt solution, upward in the decomposition vessel. Although the reason is not sufficiently known, it is assumed as below. By flowing the reaction solution upward, the mixing of the liquid in vertical direction is suppressed, and short-pass of the undecomposed reaction solution is reduced even in the system in which chlorine gas is generated. Consequently, the mixing of hydrochloric acid with the chlorate salt is made more uniform, which accelerates the decomposition of the chlorate and suppresses the formation of chlorine dioxide as a byproduct.

The present invention gives effects such as mentioned below.

(1) The amount of the hydrochloric acid used can be decreased since the decomposition of a chlorate salt is accelerated by a reduced pressure in a reaction vessel, so that a step of neutralizing the excess of hydrochloric acid by alkali is not necessary.
(2) The apparatuses can be made smaller since the decomposition of the chlorate salt proceeds rapidly.
(3) The reduced pressure in the decomposition vessel also serves to remove the chlorine gas from the salt solution. Therefore the process of the present invention may be combined with a process of purification of the salt solution in salt solution electrolysis.
(4) Accumulation of a chlorate salt in a circulating salt solution is prevented in salt solution electrolysis. Therefore, according to the present invention, the salt solution purge which is conducted conventionally for prevention of accumulation of a chlorate salt is not required, and the salt solution electrolysis can be practiced in a completely closed system.
(5) The chlorate content in a caustic alkali as the product of salt solution electrolysis can be lowered, so that the quality of the product is improved.
(6) In decomposition of a chlorate salt, chlorine and chlorine dioxide are formed. The practice of the present invention makes lower the ratio of the chlorine dioxide formation, allowing effective utilization of the produced gas as the raw material for liquefied chlorine, synthetic hydrochloric acid, hypochlorite salts, and the like.

By combining the operation of pressure reduction and the operation of flowing the solution upward, the effect is heightened remarkably.

The present invention is described more specifically by reference to examples and comparative examples without limiting the invention in any way.

In the present invention, the analysis of the chlorate salt was conducted as follows. Ferrous sulfate ($FeSO_4$) is added in excess to the salt solution. After the mixture is boiled, the remaining ferrous sulfate is titrated with potassium dichromate ($K_2Cr_2O_7$) using barium diphenylaminesulfonate as the indicator. The chlorine dioxide in the produced gas was determined according to the method described in "Bosai Shishin (Guide to Hazard Prevention) II-8", page 6: "Bunseki Shiken Hoho" (Analysis Test Methods) edited by Japan Chemical Society, published by Maruzen, Tokyo.

Example 1

A return salt solution (containing NaCl: 209 g/l, and $NaClO_3$: 10.5 g/l) from a cation-exchange membrane electrolysis cell for aqueous sodium chloride at a flow rate of 5.3 l/hr, and aqueous 35 % hydrochloric acid at a flow rate of 0.70 l/hr were separately fed continuously to a 3-liter cylindrical decomposition vessel made of glass and provided with a stirring blade. The temperature in the decomposition vessel was kept at 80 °C, and the solution mixture was stirred at a rate of 200 rpm to uniformize the reaction solution composed of the salt solution and the hydrochloric acid. The absolute pressure in the decomposition vessel was kept at 44.0 kPa (330 mmHg) since the saturated vapor pressure of the reaction solution was 40.0 kPa (300 mmHg). The reaction solution fed at a constant flow rate was discharged continuously after the reaction. The concentration of sodium chlorate was determined every 30 minutes. After the reaction was continued for 15 hours, the decomposition degree of sodium chlorate was 78.3 % at the stationary state.

Comparative Example 1

The sodium chlorate in the salt solution was decomposed under the same conditions as in Example 1 except that the internal pressure of the decomposition vessel was kept at atmospheric pressure. The decomposition degree of the sodium chlorate in the salt solution was 62.9 % at the stationary state.

Example 2

A return salt solution (containing NaCl: 198 g/l, and $NaClO_3$: 13.2 g/l) from a cation-exchange electrolysis cell for aqueous sodium chloride at a flow rate of 10.7 l/hr, and aqueous 35 % hydrochloric acid at a flow rate of 2.41 l/hr were fed continuously to the bottom portion of a cylindrical decomposition vessel made of glass having an inside diameter of 42 mm and a height of 2700 mm and provided with a jacket. The temperature in the decomposition vessel was kept at 80 °C, and internal pressure thereof was kept at 44.0 kPa (330 mmHg). The reaction solution fed at a constant flow rate was discharged from the point of the liquid height of 2400 mm, and the concentration of sodium chlorate therein was measured every 15 minutes. After the reaction was continued for 8 hours, the decomposition degree of sodium chlorate at the outlet of the decomposition vessel was 84.9 % at the stationary state. The concentration of chlorine dioxide in the gas formed by decomposition of the sodium chlorate was not higher than 2 % by volume. Therefore the formed gas could be collected as liquefied chlorine.

Example 3

The salt solution used in Example 2 at a flow rate of 9.82 l/hr, and aqueous 35 % hydrochloric acid at a flow rate of 2.14 l/hr was separately fed continuously to the same decomposition vessel as the one used in Example 1. The temperature in the decomposition vessel was kept at 80 °C, and the solution mixture was stirred at a rate of 200 rpm to uniformize the reaction solution composed of the salt solution and the hydrochloric acid. The absolute pressure in the decomposition vessel was kept at 44.0 kPa (330 mmHg). The reaction solution fed at a constant flow rate was discharged continuously after the reaction, and the concentration of sodium chlorate was determined every 15 minutes. After the reaction was continued for 8 hours, the decomposition degree of sodium chlorate was 76.2 % at the stationary state.

Comparative Example 2

The sodium chlorate in the salt solution was decomposed under the same conditions as in Example 3 except that the internal pressure of the decomposition vessel was kept at atmospheric pressure. The decomposition degree of sodium chlorate in the salt solution was 55.4 % at the stationary state. The concentration of chlorine dioxide in the gas formed by decomposition of the sodium chlorate was 5.4 % by volume. Consequently the formed gas could not be recovered as liquefied chlorine.

Comparative Example 3

The sodium chlorate in the salt solution was decomposed under the same conditions as in Example 2 except that the reaction solution composed of the salt solution and the hydrochloric acid was fed to the top of the decomposition vessel and was discharged from the bottom of the vessel. As the result, the decomposition degree of sodium chlorate in the salt solution was 49.8 % at the stationary state.

Example 4

A return salt solution (containing NaCl: 201 g/l, and $NaClO_3$: 12.1 g/l) from a cation-exchange membrane electrolysis cell for aqueous sodium chloride at a flow rate of 2.64 l/hr, and aqueous 35 % hydrochloric acid at a flow rate of 0.66 l/hr were fed continuously to the bottom portion of the same decomposition vessel as the one used in Example 2. The temperature in the decomposition vessel was kept at 70 °C, and the absolute pressure therein was kept at 30.6 kPa (230 mmHg) since the saturated vapor pressure of the reaction solution at 70 °C was 26.7 kPa (200 mmHg). The reaction solution fed at a constant flow rate was discharged continuously, and the concentration of sodium chlorate therein was measured every one hour. After the reaction was continued for 13 hours, the decomposition degree of sodium chlorate was 82.3 % at the stationary state.

Comparative Example 4

The salt solution used in Example 4 at a flow rate of 2.41 l/hr, and aqueous 35 % hydrochloric acid at a flow rate of 0.60 l/hr was separately fed continuously to the same decomposition vessel as the one used in Example 1. The temperature in the decomposition vessel was kept at 70 °C, and the solution mixture was stirred at a rate of 200 rpm to uniformize the reaction solution composed of the salt solution and the hydrochloric acid. The absolute pressure in the decomposition vessel was kept at 86.7 kPa (650 mmHg). The reaction solution fed at a constant flow rate, after the reaction, was discharged continuously. The concentration of sodium chlorate was determined every one hour. After the reaction was continued for 10 hours, the decomposition degree of sodium chlorate was 51.4 % at the stationary state.

Example 5

A return salt solution (containing NaCl: 203 g/l, and $NaClO_3$: 6.2 g/l) from a cation-exchange membrane electrolysis cell for aqueous sodium chloride at a flow rate of 29.9 l/hr, and aqueous 35 % hydrochloric acid at a flow rate of 3.11 l/hr were fed continuously to the bottom portion of the same decomposition vessel as the one used in Example 2. The temperature in the decomposition vessel was kept at 90 °C, and the absolute pressure therein was kept at 60.0 kPa (450 mmHg) since the saturated vapor pressure of the reaction solution at 90 °C was 60.0 kPa (450 mmHg). The reaction solution fed at a constant flow rate was discharged continuously. The concentration of sodium chlorate therein was measured every 10 minutes. After the reaction was continued for 5 hours, the decomposition degree of sodium chlorate was 83.5 % at the stationary state.

Comparative Example 5

The salt solution used in Example 5 at a flow rate of 27.2 l/hr, and aqueous 35 % hydrochloric acid at a flow rate of 2.80 l/hr was separately fed continuously to the same decomposition vessel as the one used in Example 1. The temperature in the decomposition vessel was kept at 90 °C, and the solution mixture was stirred at a rate of 200 rpm to uniformize the reaction solution composed of the salt solution and the hydrochloric acid. The pressure in the decomposition vessel was kept at atmospheric pressure. The reaction solution fed at a constant flow rate was discharged continuously after the reaction. The concentration of sodium chlorate was determined every 10 minutes. After the reaction was continued for 4 hours, the decomposition degree of sodium chlorate was 52.4 % at the stationary state.

## Claims

1. A process for removing a chlorate salt from an aqueous alkali chloride solution to be subjected to a cation-exchange membrane electrolysis, comprising preparing a reaction solution by adding hydrochloric acid to the aqueous alkali chloride solution; and keeping the reaction solution at an absolute pressure of not higher than 600 mmHg and not lower than the saturated vapor pressure of the solution in a decomposition vessel.

2. A process according to claim 1, wherein the reaction solution is fed through the bottom portion of said decomposition vessel and the reaction solution is allowed to flow upward therein.

3. A process according to claim 1 or 2, in which the amount of hydrochloric acid to be added to the aqueous alkali salt solution is 10 to 50 moles per mole of the chlorate salt.

4. A process according to claim 2, wherein the upward flowing speed of the reaction solution in the vessel is 0.3 to 40 m/hr.

## Patentansprüche

1. Verfahren zur Entfernung eines Chloratsalzes aus einer wäßrigen Alkalichloridlösung, die einer Kationenaustauschmembranelektrolyse unterzogen werden soll, umfassend die Herstellung einer Reaktionslösung durch Zugabe von Salzsäure zu der wäßrigen Alkalichloridlösung und das Halten der Reaktionslösung in einem Zersetzungsgefäß unter einem absoluten Druck von nicht höher als 600 mmHg und nicht niedriger als der Sättigungsdampfdruck der Lösung.

2. Verfahren nach Anspruch 1, wobei die Reaktionslösung durch den Bodenbereich des Zersetzungsgefäßes geführt wird und es der Reaktionslösung gestattet wird, darin nach oben zu fließen.

3. Verfahren nach Anspruch 1 oder Anspruch 2, in dem die der wäßrigen Alkalisalzlösung zuzusetzende Salzsäuremenge 10 bis 50 Mol pro Mol Chloratsalz beträgt.

4. Verfahren nach Anspruch 2, wobei die Geschwindigkeit der nach oben gerichteten Strömung der Reaktionslösung in dem Gefäß 0,3 bis 40 m/h beträgt.

## Revendications

1. Procédé pour enlever un sel de chlorate d'une solution aqueuse d'un chlorure alcalin devant être soumise à une électrolyse avec membrane échangeuse de cations, comprenant la préparation d'une solution réactionnelle par addition d'acide chlorhydrique à la solution aqueuse de chlorure alcalin, et le maintien de la solution réactionnelle à une pression absolue non supérieure à 600 mm de Hg (80,0 kPa) et non inférieure à la pression de vapeur saturée de la solution dans un récipient de décomposition.

2. Procédé selon la revendication 1, dans lequel la solution réactionnelle est introduite par la partie inférieure dudit récipient de décomposition et la solution réactionnelle est laissée s'écouler dans la direction du haut de celui-ci.

3. Procédé selon la revendication 1 ou 2, dans lequel la quantité de l'acide chlorhydrique à ajouter à la solution aqueuse de sel alcalin est de 10 à 50 moles par mole du sel de chlorate.

4. Procédé selon la revendication 2, dans lequel la vitesse de l'écoulement de la solution réactionnelle vers le haut du récipient est 0,3 à 40 m/h.